# EUROPEAN PATENT APPLICATION

(11) **EP 4 633 002 A1**
(43) Date of publication of application: **15.10.2025**
(21) Application number: 25167325.7
(22) Date of filing: 31.03.2025
(51) Int. Cl.: H02J 13/00

(54) **CONTROL SYSTEM, MASTER CONTROL MODULE, POWER MODULE AND METHOD THEREOF**

(30) Priority: 29.03.2024 CN 202410382749
(71) Applicant: Schneider Electric (China) Co., Ltd., Beijing 100102 (CN)
(72) Inventor: WANG, Haicheng, Shanghai, 201203 (CN); YANG, Yong, Shanghai, 201203 (CN); WANG, Hao, Shanghai, 201203 (CN); FAN, Jianguo, Shanghai, 201203 (CN); YUAN, Xu, Shanghai, 201203 (CN); LI, Ganlin, Shanghai, 201203 (CN)
(74) Representative: Manitz Finsterwald Patent- und Rechtsanwaltspartnerschaft mbB

(57) **Abstract**

A control system includes a master control module and at least one power module. The master control module sends information indicating that the master control module operates normally to each of the at least one power module at a predetermined period, and performs a control operation for controlling the at least one power module, and a starting power module whose operating address is a predetermined starting address among the at least one power module operates as the master control module based on not receiving the information within the predetermined period, wherein the operating addresses of the at least one power module are ranked according to a sequential order in which the master control module receives requests for the operating addresses by the at least one power module, and starting from the predetermined starting address.

## Description

### TECHNICAL FIELD

The present disclosure relates to a control system for adaptive modular power control, a master control module and a power module in the control system, and a method performed by the master control module and the power module.

### BACKGROUND

For an adaptive modular power conversion system, a one-master-multi-slave architecture is generally employed. A master control module, which is a master device, takes responsibility for communicating with an upstream microgrid control system, and coordinating and controlling a plurality of downstream power modules, which are slave devices. Under such architecture, once the master control module fails, a major adverse impact arises to the system. In order to avoid such impact, there has been a solution employing a redundant master control module, that is, configuring a standby master control module to work as a new master control module when the master control module fails. However, this solution costs excessively and is complicated, and it is generally not used except in some fields of critical infrastructure.

### SUMMARY

According to an aspect of the present disclosure, a control system is provided. The control system includes a master control module and at least one power module. The master control module sends information indicating that the master control module operates normally to each of the at least one power module at a predetermined period, and performs a control operation for controlling the at least one power module. A starting power module whose operating address is a predetermined starting address among the at least one power module operates as the master control module based on not receiving the information within the predetermined period. The operating addresses of the at least one power module are ranked according to a sequential order in which the master control module receives requests for the operating addresses by the at least one power module, and starting from the predetermined starting address.

Optionally, the master control module and each of the at least one power module respectively maintain information tables for recording information of each of the at least one power module, and the master control module and each of the at least one power module maintain respective ones of the information tables based on the control operation.

Optionally, the information of each of the power modules includes an identifier, an operating address and an operating status of the power module.

Optionally, the control operation includes at least one of: an operation for adding a power module that enters an initializing status among the at least one power module, an operation for removing a power module to be removed among the at least one power module, and an operation for altering an operating status of a power module among the at least one power module.

Optionally, the operation for adding the power module that enters an initializing status among the at least one power module includes: receiving an address request message including an identifier of the power module that enters the initializing status; determining an operating address of the power module that enters the initializing status; and sending an address assignment message including the identifier of the power module that enters the initializing status and the determined operating address of the power module that enters the initializing status, wherein the master control module and each of the at least one power module add information of the power module that enters the initializing status to respective information tables based on receiving the address assignment message.

Optionally, the operation for removing the power module to be removed among the at least one power module includes: determining the power module to be removed; re-determining the operating address of each of the at least one power module, wherein the operating address of the power module to be removed is determined as the operating address dedicated to the removed power module; sending a module removal message including an identifier of each of the at least one power module and a re-determined operating address thereof; wherein the power module to be removed deletes the information table thereof based on receiving the module removal message, wherein the master control module and each of the at least one power module except the power module to be removed update operating addresses of individual power modules in respective information tables to the corresponding re-determined operating addresses based on receiving the module removal message, and delete the information corresponding to the power module to be removed from respective information tables.

Optionally, the operation for altering the operating status of the power module among the at least one power module includes: determining a target operating status of each of the at least one power module; sending a synchronization trigger message including an identifier and a target operating status of each of the at least one power module; wherein the master control module and each of the at least one power module update operating statuses of individual power modules in respective information tables to corresponding target operating statuses based on receiving the synchronization trigger message.

Optionally, the master control module sends the information indicating that the master control module operates normally at the predetermined period after resuming operating normally; the starting power module stops operating as the master control module based on receiving the information within the predetermined period, and sends the information table maintained by the starting power module to the master control module, so that the master control module resumes performing the control operation using the information table.

According to another aspect of the present disclosure, a method performed by a power module in a control system including a master control module and at least one power module is provided. The master control module sends information indicating that the master control module operates normally to each of the at least one power module at a predetermined period, and performs a control operation for controlling the at least one power module. The method includes: determining whether the power module is a starting power module whose operating address is a predetermined starting address; in the case that the power module is determined as the starting power module, operating as the master control module based on not receiving the information within the predetermined period, wherein the operating addresses of the at least one power module are ranked according to a sequential order in which the master control module receives requests for the operating addresses by the at least one power module, and starting from the predetermined starting address.

Optionally, the method further includes: maintaining an information table for recording information of each of the at least one power module, wherein in the case that the power module is determined as the starting power module, the power module operates as the master control module based on the information table.

Optionally, the information of each of the power modules includes an identifier, the operating address and an operating status of the power module.

Optionally, the information table of the power modules is maintained based on the control operation, wherein the control operation includes at least one of: an operation for adding a power module that enters an initializing status among the at least one power module, an operation for removing a power module to be removed among the at least one power module, and an operation for altering an operating status of a power module among the at least one power module.

Optionally, in the case that the power module is determined as the starting power module, the information table is sent to the master control module based on receiving the information indicating that the master control module operates normally within the predetermined period, so that the master control module resumes performing the control operation based on the information table.

According to another aspect of the present disclosure, a method performed by a master control module in a control system including the master control module and at least one power module is provided. The method includes: sending information indicating that the master control module operates normally at a predetermined period, and performing a control operation for controlling the at least one power module, wherein a starting power module whose operating address is a predetermined starting address among the at least one power module operates as the master control module based on not receiving the information within the predetermined period, and wherein the operating addresses of the at least one power module are ranked according to a sequential order in which the master control module receives requests for the operating addresses by the at least one power module, and starting from the predetermined starting address.

Optionally, the method further includes: maintaining an information table for recording information of each of the at least one power module.

Optionally, the information of each of the power modules includes an identifier, the operating address and an operating status of the power module.

Optionally, the information table is maintained based on the control operation, wherein the control operation includes at least one of: an operation for adding a power module that enters an initializing status among the at least one power module, an operation for removing a power module to be removed among the at least one power module, and an operation for altering an operating status of a power module among the at least one power module.

Optionally, the method further includes: sending the information at the predetermined period after resuming operating normally; receiving the information table maintained by the starting power module; resuming performing the control operation using the information table.

According to yet another aspect of the present disclosure, a power module in a power conversion cabinet is provided, the power module includes: a processor; and a memory having stored thereon instructions which, when executed by the processor, cause the processor to perform the method performed by the power module according to the foregoing description.

According to yet another aspect of the present disclosure, a master control device in a power conversion cabinet is provided, the master control device includes: a processor; and a memory having stored thereon instructions which, when executed by the processor, cause the processor to perform the method performed by the master control module according to the foregoing description.

As such, a control system according to an embodiment of the present disclosure can migrate a control function of the master control module to the power module which is the slave device when the master control module fails, so as to keep a normal power conversion function. There is no need to configure a redundant main control modules, which makes the cost lower.

### BRIEF DESCRIPTION OF DRAWINGS

Various aspects, features and advantages of the present disclosure will become clearer and easier to understand from the following description of the embodiments of the present disclosure in conjunction with the accompanying drawings, in which:
Fig. 1 shows a schematic architecture of a control system according to an embodiment of the present disclosure;
Fig. 2 shows a schematic diagram of interaction between a master control module and a power module for control function migration according to an embodiment of the present disclosure;
Fig. 3 shows a schematic diagram of an information table according to an embodiment of the present disclosure;
Fig. 4 shows a schematic diagram of interaction between a master control module and a power module for a new power module to join a control system according to an embodiment of the present disclosure;
Fig. 5 shows a schematic diagram of a first information table and a fourth information table after the interaction between the master control module and the power module as shown in Fig. 4;
Fig. 6 shows a schematic diagram of interaction between a master control module and a power module for changing operating status of the power module according to an embodiment of the present disclosure;
Fig. 7 shows a schematic diagram of a first information table and a fourth information table after the interaction between the master control module and the power module as shown in Fig. 6;
Fig. 8 shows a schematic diagram of interaction between a master control module and a power module for removing the power module from a control system according to an embodiment of the present disclosure;
Fig. 9 shows a schematic diagram of a first information table and a fourth information table after the interaction between the master control module and the power module as shown in Fig. 8;
Fig. 10 shows a schematic diagram of interaction between a master control module and a power module for control function migration according to another embodiment of the present disclosure;
Fig. 11 shows a method performed by a power module according to an embodiment of the present disclosure;
Fig. 12 shows a method performed by a power module according to another embodiment of the present disclosure;
Fig. 13 shows a method performed by a master control module according to an embodiment of the present disclosure;
Fig. 14 shows a schematic block diagram of a power module according to an embodiment of the present disclosure; and
Fig. 15 shows a schematic block diagram of a master control module according to an embodiment of the present disclosure.

### DETAILED DESCRIPTION

The present disclosure will be described in detail below with reference to example embodiments thereof. However, the present disclosure is not limited to the embodiments described here, and can be implemented in many different forms. The described embodiments are only used to make the present disclosure thorough and complete, and fully convey the concept of the present disclosure to those skilled in the art. The features of the individual described embodiments can be combined or substituted with each other, unless explicitly excluded or should be excluded according to the context.

Unless otherwise defined, the technical terminologies or scientific terminologies used in the present disclosure should have common meanings as understood by those ordinary skilled in the art to which the present disclosure belongs. The words of 'first', 'second' and the like used in the present disclosure do not indicate any order, quantity or importance, but are only used to distinguish different components.

In the accompanying drawings, like reference numerals denote like or similar structural or functional components, and repetitive descriptions thereabout will be omitted in the following description.

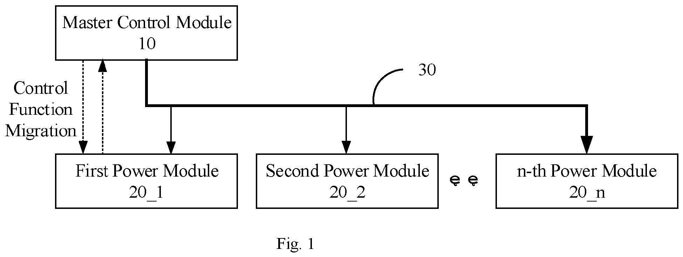

Fig. 1 shows a schematic architecture of a control system according to an embodiment of the present disclosure.

Referring to Fig. 1, a control system 1 includes a master control module 10 and at least one power module 20, e.g. first to n-th power modules 20_1 to 20_n (n≥ 1) as shown. The master control module 10 and the first to n-th power modules 20_1 to 20_n constitute a master-slave structure, where the master control module 10 is the master device, and the at least one power module 20 is the slave device. The master control module 10 and the first to n-th power modules 20_1 to 20_n are coupled to each other via a communication bus 30. The control system 1 may be deployed in a power conversion cabinet such as energy storage battery cabinet, energy storage power cabinet, photovoltaic power cabinet, AC/DC power cabinet, DC power distribution cabinet and EMS central control cabinet, and the master control module 10 provides a suitable power for the load of the power conversion cabinets by using some or all of the first to n-th power modules 20_1 to 20_n.

As described previously, once the master control module 10 fails, an adverse impact may arise to the entire power conversion cabinet and its load. The present disclosure proposes that when the master control module 10 fails, one of the first to n-th power modules 20_1 to 20_n is used instead of the master control module 10 to perform control operations on other power modules, so that it is unnecessary to configure a redundant master control module 10 with a high cost spent. The power module that performs the control operations instead of the master control module 10 may have a more reduced structure than that of the master control module 10, but it is easy to be implemented that the power module is enabled to, instead of the master control module 10, temporarily control other power modules to continue daily services such as power module addition, power module removal, and change of operating status of power module. After the master control module 10 resumes operating normally, the control function of the master control module 10 may be migrated back to the master control module 10, that is, the control operation is performed still by the master control module 10 on the first to n-th power modules 20_1 to 20_n.

As such, the control system according to an embodiment of the present disclosure can solve the problem of the failure of the master control module 10 without adding the cost or with very low cost spent, and can still keep the entire power conversion cabinet providing a stable power conversion function during the failure of the master control module.

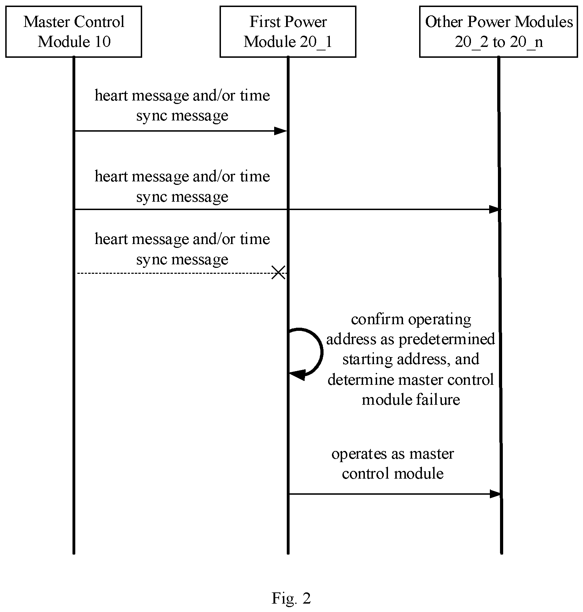

Fig. 2 shows a schematic diagram of interaction between a master control module and a power module for control function migration according to an embodiment of the present disclosure.

Referring to Fig. 2, the master control module 10 may send, in the case of operating normally, information indicating that the master control module 10 operates normally to each of the first to n-th power modules 20_1 to 20_n at a predetermined period (e.g., 1 second), and may perform control operations on the power modules 20_1 to 20_n. The information indicating that the master control module 10 operates normally may include one or both of a heartbeat message and a time synchronization message. The heartbeat message is a message for ensuring that the connection between the master control module 10 and at least one power module 20_1 to 20_n remains valid, and the time synchronization message is a message of a unified time standard for synchronizing the clock of at least one power module to the master control module 10. One or both of the heartbeat message and the time synchronization message may be sent. The control operations performed on the power modules 20_1 to 20_n may include, for example, an operation for adding a power module to the control system 1, an operation for removing such power modules from the control system 1, an operation for changing the operating statuses of such power modules, and so on.

In an embodiment of the present disclosure, the operating status of the power module may include, for example, an initializing status, a wait status, a use status and an idle status. Taking the first power module 20_1 as an example, when it is powered on, it automatically enters the initializing status, under which the first power module 20_1 obtains a temporary address but no operating address. Subsequently, the master control module 10 may add the first power module 20_1 by giving an operating address to the first power module 20_1, at this time the master control module 10 enters the wait status. In the wait status, the first power module 20_1 may be put into use by the master control module 10, but has not been put into use. Next, if the master control module 10 decides to use the first power module 20_1 to provide power, it may cause the first power module 20_1 to enter the use status. Afterwards, if the master control module 10 decides to suspend using the first power module 20_1 to provide power, it may make the first power module 20_1 to return to the wait status. If an abnormality (malfunction, failure, alarm, etc.) occurs with the first power module 20_1, the master control module 10 may remove the first power module 20_1 to make it enter the idle status.

In an embodiment of the present disclosure, the master control module 10 assigns operating addresses to the first to n-th power modules 20_1 to 20_n according to a rule as follows: such assignment causes the operating addresses of the first to n-th power modules 20_1 to 20_n to be ranked according to a sequential order in which the master control module 10 receives requests for the operating addresses by the first to n-th power modules 20_1 to 20_n, and starting from a predetermined starting address Address_#1.

In other words, the master control module 10 assigns the operating addresses to the power modules according to a 'first come, first served' standard, so that the power module, whose request for operating address is received by the master control module 10 earlier, is assigned in the earlier operating address in the address space. If there is a situation where the power module enters the initializing status for multiple times, the original operating address of this power module is cancelled and its latest operating address is assigned according to the order of requesting operating addresses for the latest time. According to such rule, the operating address of the power module, whose request for operating address is first received, is the predetermined starting address Address _#1. Hereinafter, the power module whose address is the predetermined starting address Address_#1 is referred to as a 'starting power module'. As such, the individual operating addresses of the power modules 20_1 to 20_n can be managed conveniently, and the limited address space can be used as efficiently as possible.

When the master control module 10 fails, it can no longer send the information indicating that the master control module 10 operates normally (e.g., heartbeat message and/or time synchronization message), and cannot perform the control operations on the power modules 20_1 to 20_n, either.

In an embodiment of the present disclosure, the starting power module whose operating address is the predetermined starting address Address_#1 among the at least one power module 20_1 to 20_n operates as the master control module 10 based on not receiving the information indicating that the master control module 10 operates normally within the predetermined period. For example, like the master control module 10, the starting power module sends a heartbeat message and/or a time synchronization message of this starting power module to other power modules, and performs, instead of the master control module 10, control operations such as power module addition, power module removal, and change of status of power module.

For example, in the example in Fig. 1, the first power module 20_1 is the starting power module which, in the case of not receiving the heartbeat message or time synchronization message of the master control module 10 within the predetermined period, can determine that the master control module 10 fails. Thus, the first power module 20_1 operates as the master control module, including sending the heartbeat message or time synchronization message of the first power module 20_1 to the second to n-th power modules 20_2 to 20_n to inform that it operates normally, and performing control operations such as power module addition, power module removal, and change of status of power module.

As such, the control system 1 according to an embodiment of the present disclosure, by migrating the control function of the master control module 10 to the starting power module when the master control module 10 fails, prevents the control function of the master control module 10 from being interrupted and ensures that the power conversion function is carried out stably. This saves the cost and reduces the complexity compared with additionally arranging a redundant master control module 10 in the control system 1. The failed master control module 10 may leave the power conversion cabinet to get repaired or replaced.

In an embodiment of the present disclosure, the master control module 10 and each of the first to n-th power modules 20_1 to 20_n may respectively maintain information tables for recording information of each of the power modules. Moreover, the starting power module operates as the master control module based on the information table it maintains.

For example, the master control module 10 may create, before adding a power module (that is, before giving an operating address to it to make it enter the wait status), a zeroth information table Table_0 for maintaining information of each of the power modules, and afterwards, update the zeroth information table Table_0 based on the performing of the control operations on the first to n-th power modules 20_1 to 20_n (in other words, the interaction between the master control module 10 and the first to n-th power modules 20_1 to 20_n).

For example, each of the first to n-th power modules 20_1 to 20_n may create information tables Table_1 to Table_n for maintaining information of each of the power modules upon entering an initializing status. Moreover, the respective first to n-th information tables Table_1 to Table_n may be updated based on the control operation on the at least one power module 20_1 to 20_n by the master control module 10 after the creation.

As such, when it is determined that the master control module 10 fails, the starting power module may continue to control other power modules to work stably based on the information table it maintains.

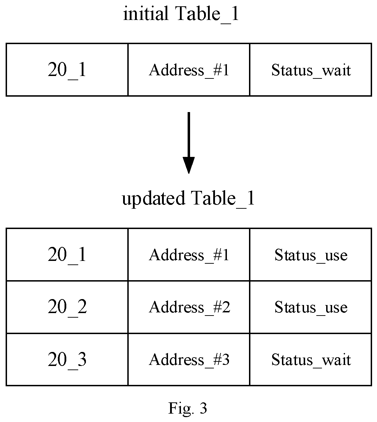

Fig. 3 shows a schematic diagram of an information table according to an embodiment of the present disclosure.

Referring to Fig. 3, the first power module 20_1 obtains the operating address Address_#1 from the master control module 10 and thus enters the wait status, so the first information table Table_1 of the first power module 20_1 is created as 'initial Table_1' as shown in Fig. 3. The '20_1' in the table indicates the identifier of the first power module 20_1. The 'Address_#1' in the table indicates the operating address obtained by the first power module 20_1. The 'Status_wait' in the table indicates the operating status of the first power module 20_1, i.e., the wait status.

After a series of control operations on the at least one power module 20_1 to 20_n by the master control module 10, the master control module 10 has successively added the second power module 20_2 and the third power module 20_3, and the first and second power modules 20_1 and 20_2 have been put into use, whereas the third power module 20_3 is still in the wait status. At this time, the first information table Table_1 is updated as shown by 'updated Table_1' in Fig. 3. The '20_2' and '20_3' in the table indicate the identifiers of the second to third power modules 20_1 and 20_3, respectively. The 'Address_#2' and 'Address_#3' in the table indicate the operating addresses of the second and third power modules 20_2 and 20_3, respectively. The 'Status_use' in the table indicates that the operating statuses of the first to second power modules 20_1 to 20_2 are the use status. The 'Status_wait' in the table indicates that the operating status of the third power module 20_3 is the wait status.

It should be understood that multiple updates can be undergone from the 'initial Table_1' to the 'updated Table_1'.

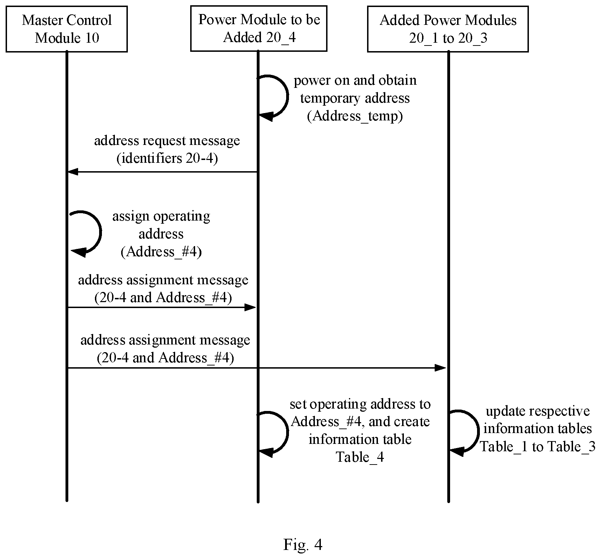

In the following, an example of the control operation performed by the master control module 10 on the first to n-th power modules 20_1 to 20_n, in other words, the interaction between the master control module 10 and the first to n-th power modules 20_1 to 20_n will be described in conjunction with Figs. 4-9.

Fig. 4 shows a schematic diagram of interaction between a master control module and a power module for adding a power module according to an embodiment of the present disclosure.

Referring to Fig. 4, it is assumed that the master control module 10 has added the first to third power modules 20_1 to 20_3, and the information of the first to third power modules 20_1 to 20_3 is as shown by 'updated Table_1' in Fig. 3. At this time, the fourth power module 20_4 is powered on and thus obtains a temporary address Address_temp. For the convenience of describing Fig. 4, here, the fourth power module 20_4 is referred to as a power module to be added, and the first to third power modules 20_1 to 20_3 are collectively referred to as added power modules.

The power module to be added 20_4 firstly sends an address request message Addressrequest20_4 containing the identifier ID 20_1 of the first power module 20_1.

The master control module 10, in response to receiving the address request message Addressrequest20_4, assigns an operating address to the power module to be added 20_4. The assignment of operating addresses follows the aforementioned rule that: the individual operating addresses of the individual added power modules are ranked according to a sequential order in which the individual corresponding address request messages are received by the master control module 10, and starting from the predetermined starting address Address_#1. In this example, it is assumed that the master control module 10 receives the address request message of the power module to be added 20_4 later than it receives that of the third power module 20_3, it assigns the operating address Address_#4 to the power module to be added 20_4.

Subsequently, the master control module 10 sends an address assignment message Addressassgin20_4 including the identifier 20_4 of the power module to be added 20_4 and the operating address Address_#4 assigned to it.

In an embodiment of the present disclosure, the master control module 10 may communicate with the first to n-th power modules using a producer/consumer-type communication protocol such as controller area network (CAN) communication protocol, so that a message sent by the master control module 10 can be received by each of the first to n-th power modules. For example, under the CAN protocol, the address assignment message Addressassgin20_4 can be received by both the power module to be added 20_4 and the added power modules 20_1 to 20_3.

After receiving the address assignment message Addressassgin20_4, the power module to be added 20_4 can determine that the identifier 20-4 of Addressassgin20_4 in this address assignment message is the same as its identifier 20-4, and thus set its operating address to the operating address Address_#4 in the address assignment message Addressassgin20_4, and create the fourth information table Table_4 it is to maintain. The fourth information table Table_4 is created to contain only the information of the power module to be added 20_4.

After receiving the address assignment message Addressassgin20_4, the added power modules 20_1 to 20_3 can respectively determine that the identifier 20_4 of Addressassgin20_4 in this address assignment message is different from the identifiers 20_1, 20_2 or 20_3 thereof, and thus respectively update the first to third information tables Table_1 to Table_3 they maintain respectively: add the information regarding the fourth power module 20_4 to the first to third information tables Table_1 to Table_3, respectively.

Likewise, the master control module 1 adds the information regarding the fourth power module 20_4 to the zeroth information table Table_0 it maintains.

It should be understood that in the case that the master control module 10 fails, the operation implemented by the master control module 10 in the interaction as shown in Fig. 4 should be implemented by the starting power module that operates as the master control module 10.

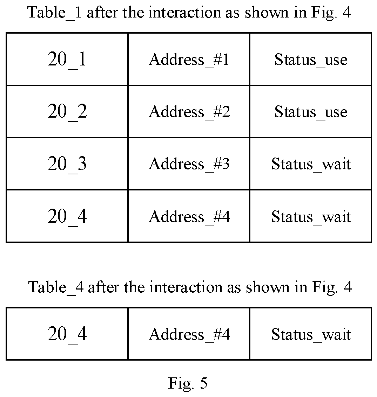

Fig. 5 shows a schematic diagram of the first information table Table_1 and the fourth information table Table_4 after the interaction between the master control module and the power module as shown in Fig. 4.

It can be seen, by comparing the 'updated Table_1' in Fig. 3 with the 'Table_1 after the interaction as shown in Fig. 4' in Fig. 5, that the information of the fourth power module 20_4 has been synchronized into the information table Table_1 maintained by the first power module 20_1.

For simplicity, the zeroth information table Table_0, the second information table Table_2 and the third information table Table_3 after the interaction as shown in Fig. 4 are not shown in detail in Fig. 5.

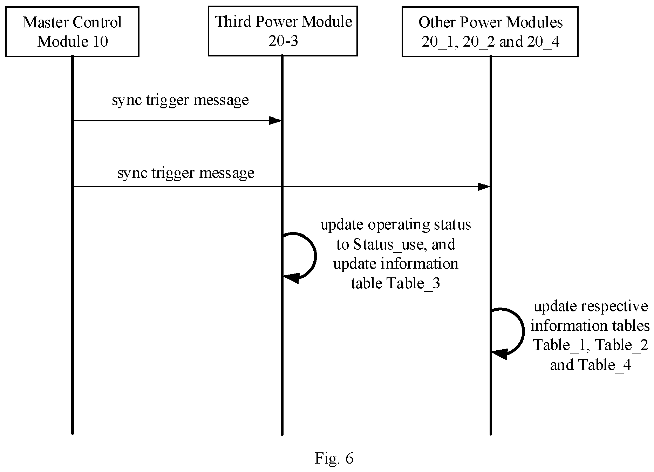

Fig. 6 shows a schematic diagram of interaction between a master control module and a power module for changing operating status of the power module according to an embodiment of the present disclosure.

Referring to Fig. 6, currently, the master control module 10 has added the first to fourth power modules 20_1 to 20_4, and the information of the first to fourth power modules 20_1 to 20_4 is as shown by 'Table_1 after the interaction as shown in Fig. 4' in Fig. 5. After calculation, the master control module 10 thinks that the load needs more power, so it decides to put the third power module 20_3 that is currently in the wait status into use.

Then, the master control module 10 sends out a synchronization trigger message Synctrigger. The synchronization trigger message Synctrigger may include the identifiers 20_1 to 20_4 of each of the first to fourth power modules 20_1 to 20_4 and the target operating statuses of each of the first to fourth power modules 20_1 to 20_4, for example, use, use, use and wait, respectively.

After receiving the synchronization trigger message Synctrigger, the third power module 20_3 can determine that its current operating status (i.e., wait) is different from the target operating status (i.e., use), and thus alter its operating status to the target operating status (i.e., use). Meanwhile, the third power module 20_3 will further update its information table Table_3 with reference to this synchronization trigger message: update the operating statuses of the individual power modules in the information table Table_3 to the target operating statuses corresponding to the individual power modules in the synchronization trigger message.

The first, second, and fourth power modules 20_1, 20_2, and 20_4 keep their operating statuses unchanged based on determining that their current operating statuses are the same as the target operating statuses. The first, second, and fourth power modules 20_1, 20_2, and 20_4 update respective information tables Table_1, Table_2, and Table_4 with reference to this synchronization trigger message: update the operating statuses of the individual power modules in the information tables Table_1, Table_2, and Table_4 to the target operating statuses corresponding to the individual power modules in the synchronization trigger message. For example, the first power module 20_1 updates the item in the first information table Table_1 corresponding to the operating status of the third power module 20_3 to 'Status_use'. It should be noted that the information table Table_4 of the fourth power module 20_4 does not have the information of the first to third power modules 20_1 to 20_3 before, then at this time, the fourth power module 20_4 can write the information of all of the first to third power modules 20_1 to 20_3 into the information table Table_4 with reference to the synchronization trigger message.

The master control module 1 may also update the item regarding the operating status of the third power module 20_3 to 'Status_use' in the zeroth information table Table_0 it maintains.

It should be understood that in the case that the master control module 10 fails, the operation implemented by the master control module 10 in the interaction as shown in Fig. 6 can be implemented by the starting power module that operates as the master control module 10.

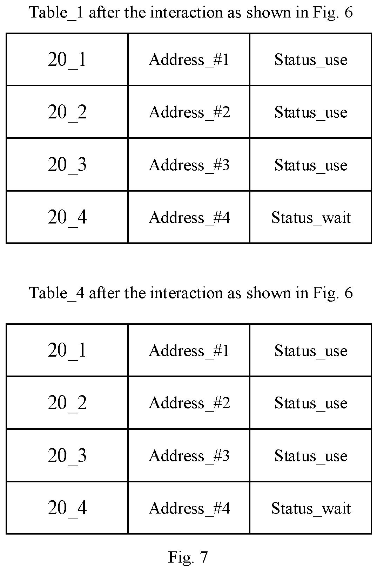

Fig. 7 shows a schematic diagram of the first information table Table_1 and the fourth information table Table_4 after the interaction between the master control module and the power module as shown in Fig. 6.

It can be seen, by comparing the 'Table_1 after the interaction as shown in Fig. 4' in Fig. 5 with the 'Table_1 after the interaction as shown in Fig. 6' in Fig. 7, that the change of operating status regarding the third power module 20_3 has been synchronized into the information table Table_1 maintained by the first power module 20_1.

It can be seen, by comparing the "Table_4 after the interaction as shown in Fig. 4' in Fig. 5 with the 'Table_4 after the interaction as shown in Fig. 6' in Fig. 7, that the information regarding the first to third power modules 20_1 to 20_3 has been synchronized into the information table Table_4 maintained by the fourth power module 20_4.

For simplicity, the zeroth information table Table_0, the second information table Table_2 and the third information table Table_3 after the interaction as shown in Fig. 6 are not shown in detail in Fig. 7.

In another example, due to the limitation on the length of message by the communication protocol, one synchronization trigger message may not contain the identifiers of all of the power modules or operating statuses of all of the power modules. If the 'Table_4 after the interaction as shown in Fig. 6' in Fig. 7 is considered as a change of the fourth power module 20_4 after receiving such a synchronization trigger message, this information table may also contain the identifiers and operating statuses of some of power modules.

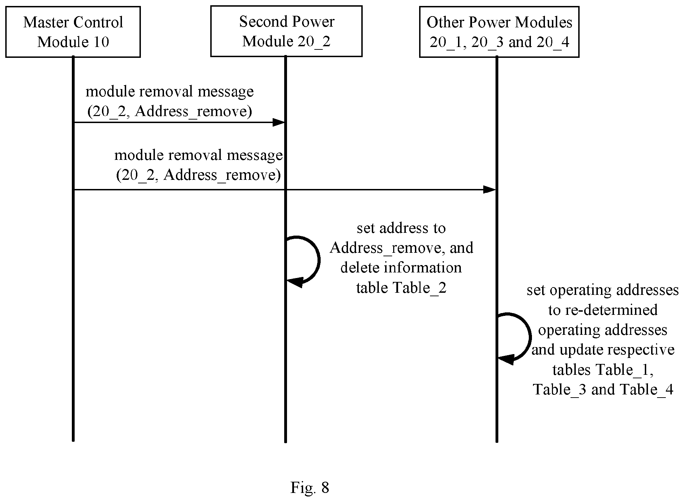

Fig. 8 shows a schematic diagram of interaction between a master control module and a power module for removing the power module from a control system according to an embodiment of the present disclosure.

Referring to Fig. 8, currently, the information of the first to fourth power modules 20_1 to 20_4 is as shown by 'Table_1 after the interaction as shown in Fig. 6' in Fig. 7. The master control module 10 determines that the second power module 20_2 malfunctions and thus decides to remove it. The master control module 10 can determine that the second power module 20_2 malfunctions by receiving a warning message indicating that the second power module 20_2 malfunctions from the second power module 20_2 or by monitoring the load operating condition of the second power module 20_2.

In order to guarantee that after the removal of the second power module 20_2, the addresses of the remaining power modules still meet the aforementioned rules (that is, the individual operating addresses of the individual added power modules are ranked according to a sequential order in which the individual corresponding address request messages are received by the master control module 10, and starting from the predetermined starting address Address_#1), the master control module needs to redetermine the operating address of each of the first to fourth power modules. The operating address of the second power module to be removed 20_2 is re-determined as an operating address Address_remove dedicated to the removed power module. The operating addresses of the first, third, and fourth power modules 20_1, 20_3, and 20_4 are updated to the re-determined new operating addresses Address_#1, Address_#2, and Address _#3. Then, the master control module 10 sends out a module removal message Modremove, which may include an identifier indicating each of the power modules and an operating address re-determined for each of the power modules.

After receiving the module removal message Modremove, the power module to be removed 20_2 knows that it is a power module to be removed based on its re-determined operating address being the operating address Address_remove dedicated to the removed power module, and thus deletes the second information table Table_2 it maintains.

Each of the first, third, and fourth power modules 20_1, 20_3, and 20_4 then updates the operating addresses of the individual power modules in respective information tables to the corresponding operating addresses re-determined by the master control module 10, and deletes the information of the power module to be removed 20_2 from respective information tables. Meanwhile, each of the first, third, and fourth power modules 20_1, 20_3, and 20_4 further sets respective operating addresses to the operating addresses re-determined by the master control module 10 for them.

For example, the first power module 20_1 deletes the information of the power module to be removed 20_2 from the first information table Table_1, and writes the operating addresses of the first, third and fourth power modules 20_1, 20_3 and 20_4 in the first information table Table_1 as Address_#1, Address_#2 and Address_#3. It should be noted that although the re-determined new operating address of the first power module 20_1 is the same as its current operating address, so that the action of writing the operating address Address_#1 into the first information table Table_1 by the first power module 20_1 seems to be redundant, this can simplify the instruction design.

For example, likewise, the fourth power module 20_4 deletes the information of the second power module to be removed 20_2 from the fourth information table Table_4, and rewrites the operating addresses of the first, third and fourth power modules 20_1, 20_3 and 20_4 in the fourth information table Table_4 as Address_#1, Address_#2 and Address _#3. Meanwhile, the first power module 20_1 further resets its operating address to Address _#3.

After sending out the module removal message Modremove, the master control module 10 may also delete the information of the second power module 20_2 in the zeroth information table Table_0 it maintains, and update the operating addresses of the remaining power modules in the information table Table_0 to their corresponding re-determined operating addresses.

It should be understood that in the case that the master control module 10 fails, the operation implemented by the master control module 10 in the interaction as shown in Fig. 8 can be implemented by the starting power module that operates as the master control module 10.

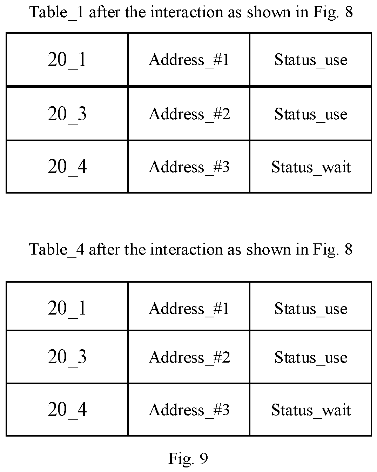

Fig. 9 shows a schematic diagram of the first information table Table_1 and the fourth information table Table_4 after the interaction between the master control module and the power module as shown in Fig. 8.

It can be seen, by comparing the 'Table_1 after the interaction as shown in Fig. 6' in Fig. 7 with the 'Table_1 after the interaction as shown in Fig. 8' in Fig. 9, that the removal regarding the second power module 20_2 has been synchronized into the first information table Table_1 maintained by the first power module 20_1, and the change of the operating addresses of the third and fourth power modules 20_3 and 20_4 due to the removal of the second power module 20_2 has also been synchronized into the first information table Table_1.

It can be seen, by comparing the "Table_4 after the interaction as shown in Fig. 6' in Fig. 7 with the 'Table_4 after the interaction as shown in Fig. 8' in Fig. 9, that the removal regarding the second power module 20_2 has been synchronized into the fourth information table Table_4 maintained by the fourth power module 20_4, and the change of the operating addresses of the third and fourth power modules 20_3 and 20_4 due to the removal of the second power module 20_2 has also been synchronized into the fourth information table Table_4.

For simplicity, the zeroth information table Table_0 and the third information table Table_3 after the interaction as shown in Fig. 8 are not shown in detail in Fig. 9.

In another example, due to the limitation on the length of message by the communication protocol, one module removal message may not contain the identifiers of all of the power modules or the operating addresses re-determined for all of the power modules.

The interactions between the master control module and the power module are described above in conjunction with Figs. 4-9. These interactions can respectively realize daily services required for power conversion, such as adding power module, removing power module, and changing operating status of power module. More importantly, in the process of implementing these daily services, the master control module 10 and each of the power modules 'incidentally' maintain respective information tables, so that when the master control module 10 suddenly fails, the control operation of the master control module 10 is taken over smoothly, and the master control module 10 does not have to bear the extra burden dedicated to synchronize the information of each of the power modules among each of the power modules. Therefore, this implementation is also easy to be implemented, with a complexity being much lower than that of the implementation of configuring a redundant master control module.

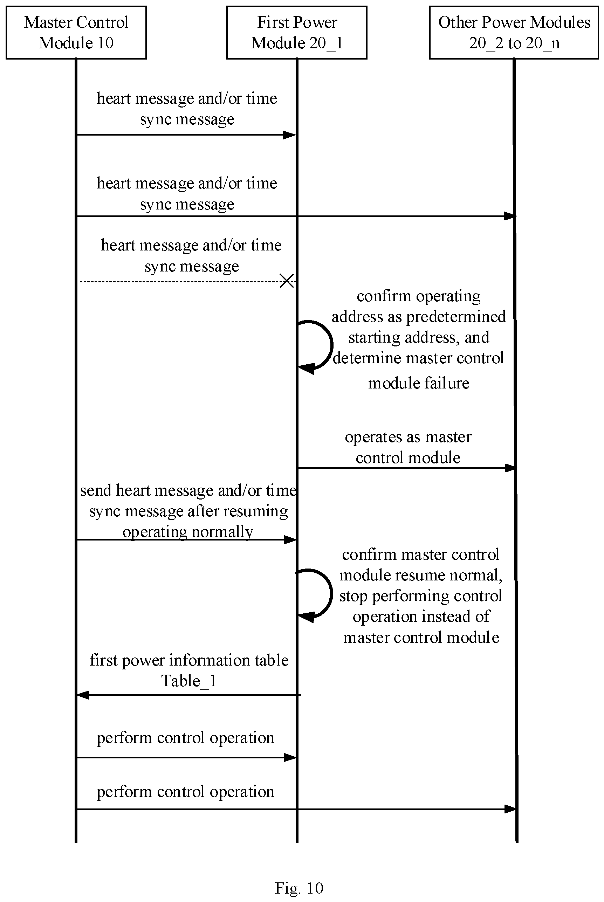

Fig. 10 shows a schematic diagram of interaction between a master control module and a power module for control function migration according to another embodiment of the present disclosure.

Referring to Fig. 10, compared with Fig. 2, a step of migrating the control function back to the master control module 10 after the control function of the master control module 10 returns to normal is added. In order to avoid repetition, the same steps as those in Fig. 2 will not be described in detailed. As shown, after the master control module 10 resumes operating normally (e.g., it is powered on again after overhaul), the heartbeat message and/or the time synchronization message of the master control module are sent to each of the first to n-th power modules 20_1 to 20_n at the predetermined period.

The first power module 20_1 stops operating as the master control module 10 based on receiving the heartbeat message and/or the time synchronization message of the master control module 10 within the predetermined period, and sends the first information table Table_1 it maintains to the master control module 10. The master control module 10 resumes performing the control operation on the first to n-th power modules 20_1 to 20_n based on the received first information table Table_1. For example, the master control module continues to perform subsequent operations such as power module addition, power module removal and alteration of operating status of power module according to the information of the individual power modules in the first information table Table_1.

As such, the control system 1 according to an embodiment of the present disclosure can automatically migrate its control function back to the master control module in the case that the master control module resumes operating normally, so that the control system 1 is more stable and reliable.

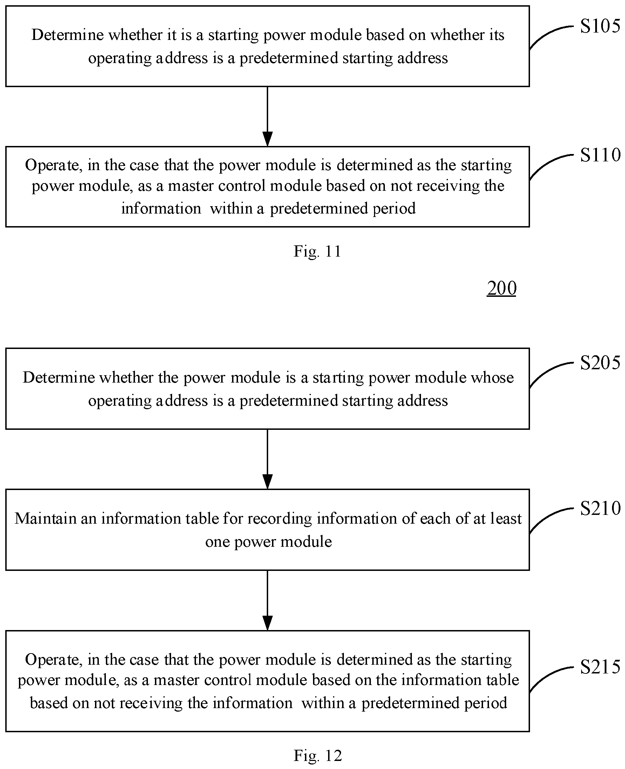

Fig. 11 shows a method 100 performed by a power module according to an embodiment of the present disclosure. The power module can be any of the first to n-th power modules in Fig. 1.

Referring to Fig. 11, the method 100 may include steps S105 and S110.

In step S105, the power module determines whether it is a starting power module based on whether its operating address is a predetermined starting address. In step S110, in the case that it is determined as the starting power module, it operates as a master control module based on not receiving information indicating that the master control module operates normally within a predetermined period.

For example, in the example shown in Fig. 2, the first power module 20_1 determines, based on its operating address being the predetermined starting address Address_#1, that it is the starting power module, and thus operates as the master control module 10 based on not receiving a heartbeat message or time synchronization message of the master control module 10 within the predetermined period. For example, the heartbeat message and/or the time synchronization message of the first power module 20_1 are sent to other power modules 20_2 to 20_n and a control operation for controlling other power modules 20_2 to 20_n is performed.

Fig. 12 shows a method 200 performed by a power module according to another embodiment of the present disclosure. The power module can be any of the first to n-th power modules in Fig. 1.

Referring to Fig. 12, the method 200 may include steps S205 to S215.

In step S205, the power module determines, based on whether its operating address is a predetermined starting address, whether it is a starting power module. In step S210, the power module may maintain an information table for recording information of each of at least one power module. In step S215, in the case that the power module is determined as the starting power module, it operates as a master control module based on this information table, based on not receiving information indicating that the master control module operates normally within a predetermined period.

For example, in the example shown in Fig. 3, the first power module 20_1 may create an 'initial Table_1' and update it to an 'updated Table_1' after a series of control operations for the master control module. At this time, if it is detected that no heartbeat message or time synchronization message indicating the master control module is received within the predetermined period, the first power module 20_1 operates as the master control module based on this 'updated Table_1'.

In an embodiment of the present disclosure, the power module may further maintain its information table based on the control operations on the first to n-th power modules 20_1 to 20_n by the master control module. These control operations include at least one of: an operation for adding a power module that enters an initializing status among the at least one power module, an operation for removing a power module to be removed among the at least one power module, and an operation for altering an operating status of a power module among the at least one power module. As described earlier in conjunction with Figs. 4-9, in order to avoid repetition, no further description is made here.

As such, the power module according to an embodiment of the present disclosure, by performing the method 100 or 200, proactively bears the function of the master control module 10 in the case that the master control module 10 fails, so that daily services such as addition, removal and operating status change of other power modules will not be interrupted due to the failure of the master control module 10, guaranteeing that the power conversion function is carried out stably.

Only a part of the method performed by the power module is described above in conjunction with Figs. 11-12. It should be understood that the method performed by the power module can refer to and cite various aspects of the power module described previously in conjunction with Figs. 4-9 and associated accompanying drawings.

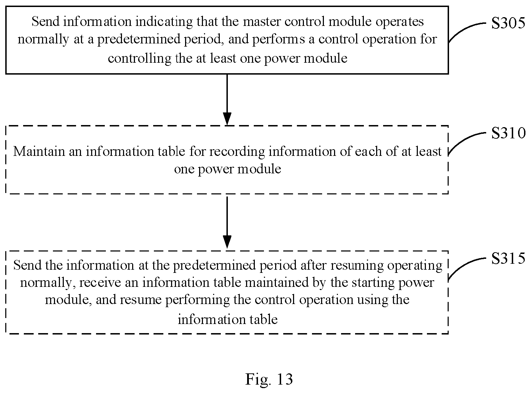

Fig. 13 shows a method 300 performed by the master control module 10 according to an embodiment of the present disclosure.

Referring to Fig. 13, the method 300 may include step S305, and optionally step S310 and step S315.

In step S305, the master control module 10 sends information indicating that it operates normally (e.g., heartbeat message and/or time synchronization message) at a predetermined period, and performs a control operation for controlling the first to n-th power modules 20_1 to 20_n. In step S310, the master control module 10 maintains an information table for recording information of each of the first to n-th power modules 20_1 to 20_n.

In an embodiment of the present disclosure, the master control module 10 may further maintain its information table based on its control operations on the first to n-th power modules 20_1 to 20_n. These control operations include at least one of: an operation for adding a power module that enters an initializing status among the at least one power module, an operation for removing a power module to be removed among the at least one power module, and an operation for altering an operating status of a power module among the at least one power module. As described earlier in conjunction with Figs. 4-9, in order to avoid repetition, no further description is made here.

If the master control module 10 malfunctions, it is possible to neither send heartbeat messages and time synchronization messages, nor perform control operations. Afterwards, the control operation will be performed by the starting power module (e.g., first power module 20_1) whose operating address is the predetermined starting address instead of the master control module, during which the information table for recording information of each of the first to n-th power modules 20_1 to 20_n is also maintained.

In step S315, the master control module 10 sends the information indicating that it operates normally at the predetermined period after resuming operating normally, so that an information table maintained by the starting power module is received from the starting power module, and then performing the control operation on the first to n-th power modules 20_1 to 20_n is resumed based on this information table.

As such, the master control module 10 according to an embodiment of the present disclosure can control the first to n-th power modules 20_1 to 20_n while operating normally by performing the method 300, and can also re-control the first to n-th power modules 20_1 to 20_n upon recover from a malfunction.

Only a part of the method performed by the master control module 10 is described above in conjunction with Fig. 13. It should be understood that the method performed by the master control module 10 can refer to and cite various aspects of the master control module described previously in conjunction with Figs. 4-9 and associated accompanying drawings.

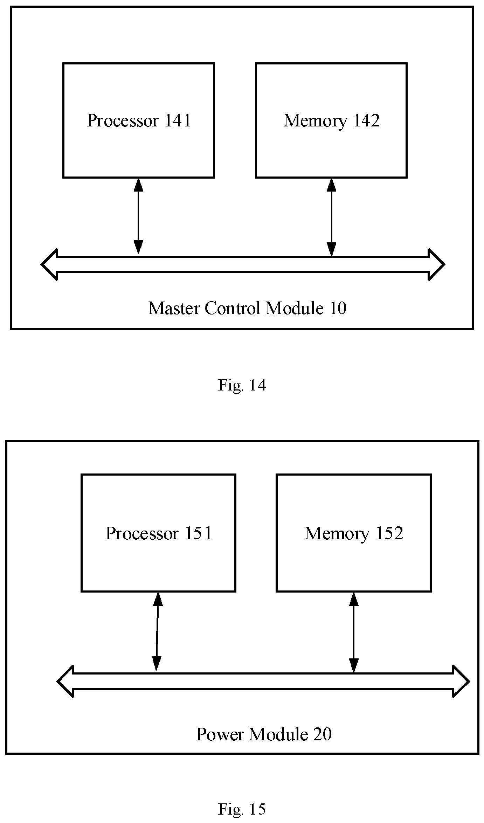

Fig. 14 shows a schematic block diagram of the master control module 10 according to an embodiment of the present disclosure. The master control module described in Fig. 14 can be used to perform the above method 300.

As shown in Fig. 14, the master control module may include a processor 141 and a memory 142. The processor 141 is coupled to a memory 142 through a communication bus, and the memory 142 has stored thereon instructions which, when executed by the processor 141, cause the above method 300 described above to be performed.

Fig. 15 shows a schematic block diagram of the power module 20 according to an embodiment of the present disclosure. The power module described in Fig. 15 can be used to perform the above method 100 and method 200.

As shown in Fig. 15, the power module 20 may include a processor 151 and a memory 152. The processor 151 is coupled to a memory 152 through a communication bus, and the memory 152 has stored thereon instructions which, when executed by the processor 151, cause the method 100 and the method 200 to be performed.

Examples of the processors 141 and 151 include microprocessors, microcontrollers, digital signal processors (DSP), field programmable gate arrays (FPGA), programmable logic devices (PLD), state machines, gating logics, discrete hardware circuits, and other suitable hardware configured to perform various functions described in the present disclosure.

The processors 141 and 151 may execute software. The software should be broadly understood as instructions, instruction sets, codes, code segments, program codes, programs, sub-programs, software modules, application programs, software application programs, software packages, routines, subroutines, objects, executable programs, execution threads, procedures, functions, etc., whether being referred to as software, firmware, middleware, microcode, hardware description language or the like. The software may reside in the memories 142 and 152.

The memories 142 and 152 can be non-transitory computer-readable medium. By way of example, the non-transitory computer-readable medium includes magnetic storage device (e.g., hard disk, floppy disk, and magnetic stripe), optical disk (e.g., compact disk (CD) or digital versatile disk (DVD)), smart card, flash memory device (e.g., card, stick or key drive), random access memory (RAM), read-only memory (ROM), programmable ROM (PROM), erasable PROM (EPROM), and electrically erasable PROM (EEPROM). The memories 142 and 152 may be respectively located in the processor 141, outside the processor 151, or distributed in a plurality of entities including the processor 141 and the processor 151. The memories 142 and 152 may be contained in a computer program product. For example, the computer program product may include a computer-readable medium in a packaging material. Those skilled in the art will recognize how to realize the functions described in the present disclosure according to the specific application and the overall design constraints imposed on the entire system.

It should be understood by those skilled in the art that the above specific embodiments are only examples rather than limitations, and various modifications, combinations, partial combinations and substitutions can be made to the embodiments of the present disclosure according to design requirements and other factors, as long as they are within the scope of the appended claims or their equivalents, that is, they belong to the scope of the claims to be protected by the present disclosure.

## Claims

1. A control system, comprising:
a master control module and at least one power module, wherein
the master control module sends information indicating that the master control module operates normally to each of the at least one power module at a predetermined period, and performs a control operation for controlling the at least one power module,
a starting power module whose operating address is a predetermined starting address among the at least one power module operates as the master control module based on not receiving the information within the predetermined period,
wherein the operating addresses of the at least one power module are ranked according to a sequential order in which the master control module receives requests for the operating addresses by the at least one power module, and starting from the predetermined starting address.

2. The control system according to claim 1, wherein the master control module and each of the at least one power module respectively maintain information tables for recording information of each of the at least one power module, and
the master control module and each of the at least one power module maintain respective ones of the information tables based on the control operation,
wherein the information of each of the power modules includes an identifier, the operating address and an operating status of the power module.

3. The control system according to claim 2, wherein
the control operation includes at least one of: an operation for adding a power module that enters an initializing status among the at least one power module, an operation for removing a power module to be removed among the at least one power module, and an operation for altering an operating status of a power module among the at least one power module.

4. The control system according to claim 3, wherein the operation for adding the power module that enters the initializing status among the at least one power module comprises:
receiving an address request message including an identifier of the power module that enters the initializing status;
determining the operating address of the power module that enters the initializing status; and
sending an address assignment message including the identifier of the power module that enters the initializing status and the determined operating address of the power module that enters the initializing status,
wherein the master control module and each of the at least one power module add information of the power module that enters the initializing status to respective information tables based on receiving the address assignment message.

5. The control system according to claim 3, wherein the operation for removing the power module to be removed among the at least one power module comprises:
determining the power module to be removed;
re-determining the operating address of each of the at least one power module, wherein the operating address of the power module to be removed is determined as an operating address dedicated to the removed power module;
sending a module removal message including the identifier of each of the at least one power module and the re-determined operating address thereof;
wherein the power module to be removed deletes the information table thereof based on receiving the module removal message,
wherein the master control module and each of the at least one power module except the power module to be removed update operating addresses of individual power modules in respective information tables to the corresponding re-determined operating addresses based on receiving the module removal message, and delete the information corresponding to the power module to be removed from respective information tables.

6. The control system according to claim 3, wherein the operation for altering the operating status of the power module among the at least one power module comprises:
determining a target operating status of each of the at least one power module;
sending a synchronization trigger message including the identifier and a target operating status of each of the at least one power module;
wherein the master control module and each of the at least one power module update operating statuses of individual power modules in respective information tables to corresponding target operating statuses based on receiving the synchronization trigger message.

7. The control system according to claim 2, wherein
the master control module sends the information indicating that the master control module operates normally at the predetermined period after resuming operating normally;
the starting power module stops operating as the master control module based on receiving the information within the predetermined period, and sends the information table maintained by the starting power module to the master control module, so that the master control module resumes performing the control operation using the information table.

8. A method performed by a power module in a control system including a master control module and at least one power module, wherein the master control module sends information indicating that the master control module operates normally to each of the at least one power module at a predetermined period, and performs a control operation for controlling the at least one power module, the method comprising:
determining whether the power module is a starting power module whose operating address is a predetermined starting address;
in the case that the power module is determined as the starting power module, operating as the master control module based on not receiving the information within the predetermined period,
wherein the operating addresses of the at least one power module are ranked according to a sequential order in which the master control module receives requests for the operating addresses by the at least one power module, and starting from the predetermined starting address.

9. The method according to claim 8, further comprising: maintaining an information table for recording information of each of the at least one power module,
wherein in the case that the power module is determined as the starting power module, the power module operates as the master control module based on the information table,
wherein the information of each of the power modules includes an identifier, the operating address and an operating status of the power module.

10. The method according to claim 9, wherein
maintaining the information table of the power module based on the control operation,
wherein the control operation includes at least one of: an operation for adding a power module that enters an initializing status among the at least one power module, an operation for removing a power module to be removed among the at least one power module, and an operation for altering an operating status of a power module among the at least one power module.

11. The method according to claim 9, further comprising:
in the case that the power module is determined as the starting power module, sending the information table to the master control module based on receiving the information indicating that the master control module operates normally within the predetermined period, so that the master control module resumes performing the control operation based on the information table.

12. A method performed by a master control module in a control system including the master control module and at least one power module, comprising:
sending information indicating that the master control module operates normally at a predetermined period, and performing a control operation for controlling the at least one power module,
wherein a starting power module whose operating address is a predetermined starting address among the at least one power module operates as the master control module based on not receiving the information within the predetermined period, and
wherein the operating addresses of the at least one power module are ranked according to a sequential order in which the master control module receives requests for the operating addresses by the at least one power module, and starting from the predetermined starting address.

13. The method according to claim 12, further comprising: maintaining an information table for recording information of each of the at least one power module, wherein the information of each of the power modules includes an identifier, the operating address and an operating status of the power module.

14. The method according to claim 13, wherein
maintaining the information table based on the control operation,
wherein the control operation includes at least one of: an operation for adding a power module that enters an initializing status among the at least one power module, an operation for removing a power module to be removed among the at least one power module, and an operation for altering an operating status of a power module among the at least one power module.

15. The method according to claim 13, further comprising:
sending the information at the predetermined period after resuming operating normally; receiving the information table maintained by the starting power module;
resuming performing the control operation using the information table.
